Europäisches Patentamt

**European Patent Office**

**Office européen des brevets**

(19)

(11) Publication number: **0 068 906**
**A1**

# EUROPEAN PATENT APPLICATION

(12)

(21) Application number: **82303454.1**

(22) Date of filing: **01.07.82**

(51) Int. Cl.³: **A 01 C 3/02**

(30) Priority: **01.07.81 GB 8120332**

(43) Date of publication of application: **05.01.83**
**Bulletin 83/1**

(84) Designated Contracting States: **AT BE CH DE FR GB IT LI LU NL SE**

(71) Applicant: **S.C.S. BIOTECHNOLOGY LIMITED, Elmsfield Chipping Norton, Oxford OX7 5XS (GB)**
Applicant: **FARM GAS LIMITED, Industrial Estate, Bishops Castle Shropshire (GB)**

(72) Inventor: **Murcott, Andrew James, Ridge Farm Linley, Bishops Castle Shropshire (GB)**

(74) Representative: **Allsop, John Rowland et al, c/o Edward Evans & Co. Chancery House 53-64 Chancery Lane, London, WC2A 1SD (GB)**

(54) **A valve device for agitating the slurry in an anaerobic or aerobic digester.**

(57) A valve device (V) particularly for use in agitating the working slurry in the form of animal excreta, in an anaerobic or aerobic digester.

The valve comprises an outer cylinder (1) in which is rotatably mounted an inner cylinder (4) such that a small clearance (C) exists between the two cylinders.

The outer cylinder (1) is provided with peripherally spaced outlet ports (2), and the inner cylinder with an axially directed inlet duct (6) leading to a radially directed outlet duct (5) arranged to index sequentially with the ports (2) as it rotates.

The inlet duct (6) is connected to a source of compressed gas or air while the outlet ports (2) to feed lines or pipes to the digester slurry tank.

With the inner cylinder rotating the compressed gas or air is fed to each outlet port (2) in turn and hence sequentially to the aeration or mixing lines distributed over the tank.

"A valve device for agitating the slurry in an
anaerobic or aerobic digester"

## FIELD OF THE INVENTION

The present invention relates to a valve and more
particularly to a valve for use in agitating and/
or mixing the working medium such as animal excreta,
being broken down by bacterial decomposition, in aerobic
and anaerobic digesters.

## BACKGROUND OF THE INVENTION

There are many situations where it becomes necessary to
agitate a mixture to maintain it in an homogeneous state.

Thus the need to effect slurry agitation in aerobic and
anaerobic digesters is due mainly to two factors,
that, without it, first the bacteria tends to become
inactive, and second the liquid separates from the solid
making it difficult to remove from the slurry tank.

Hence in an anaerobic digester, the slurry may be
agitated by means of recirculation of compressed methane
gas produced during the digestion process. However,
with slurry tanks of large surface area either a very
large compressor must be used for effective mixing, or
the gas may be sequentially directed into the tank
holding the slurry from a small compressor through a set
of separate pipes. Thus a well-known method of
sequential mixing by compressed air or gas employs the
use of a set of solenoid or pneumatic valves which are
operated automatically to admit the air or gas in turn
to the infeed pipes to the tank.

It has been found however that such known methods for
maintaining homogeneity of the contents of an anaerobic
digester are cumbersome and expensive to operate and maintain.

## SUMMARY OF THE INVENTION

It is an object of the present invention to provide simplification of the means for agitating the liquid of a tank particularly for agitating the slurry in an aerobic or anaerobic digester.

According to one aspect of the invention there is provided a valve device for agitating slurry in an aerobic or anaerobic digester comprising first inner and second outer valve body parts (1,4) and characterised in that the valve body parts (1,4) are movable relative to one another, one of the valve body parts (1) being provided with spaced outlet ports (2) each for delivering compressed gas or air through mixing or aerating lines (P) to the slurry tank (T) of the digester, the other valve body part (4) constituting, or being provided with, delivery duct means (5,6) for sequential delivery of compressed gas or air from an external source (G) to said outlet ports (2) during said relative movement.

The primary advantage of such a valve to its use in digesters of the type referred to, is that the fluid, normally a compressed gas or air, is always passing along one of the outlet ports so that one part or another of the slurry tank of the digester is always under the effect of aeration or agitation when the compressor, compressing the gas or air being fed into the valve, is running.

Further the gas through the valve will take the path of least resistance and since the contents of the tank being mixed serve as a liquid seal for the outlet ports not in use, it is not absolutely necessary that there is a complete seal between successive ones of the outlet ports of the rotary valve.

Other features and advantages of the present invention will become apparent from the description that follows.

BRIEF DESCRIPTION OF THE DRAWINGS

An embodiment of the invention will now be described by way of example with reference to the drawings wherein:

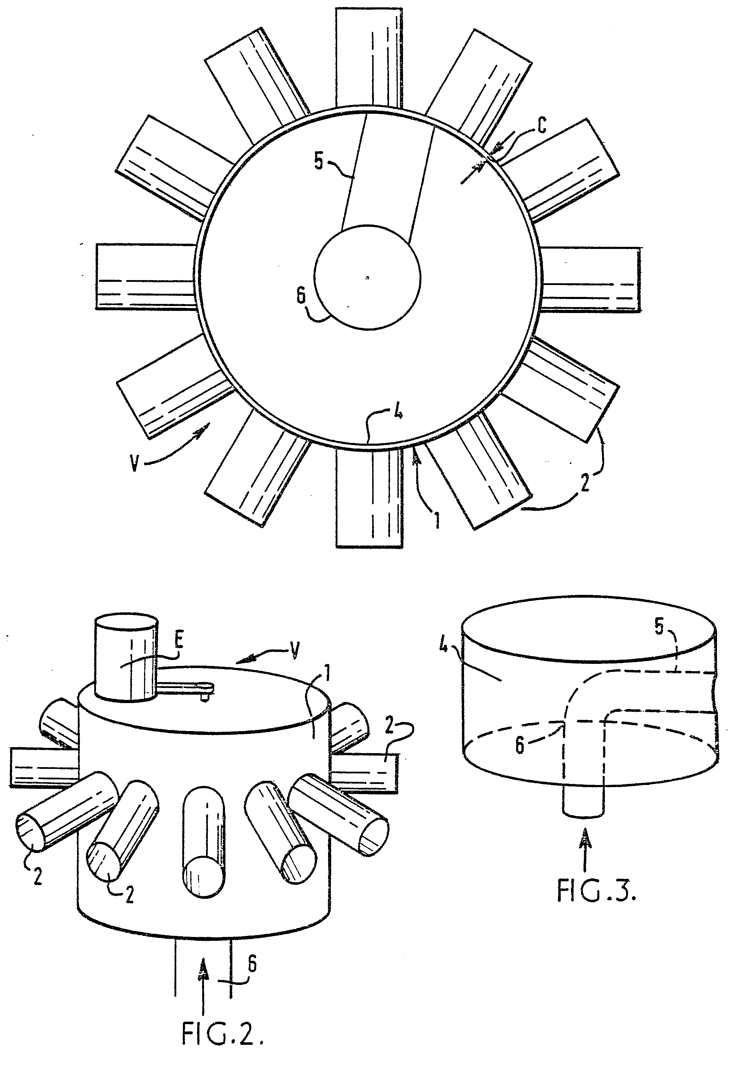

Figure 1 shows a cross-sectional plan view of a rotary valve;

Figure 2 is a perspective view of the rotary valve;

Figure 3 is a perspective view of the inner rotatable cylinder of the rotary valve; and

Figure 4 is a schematic illustration of the use of the rotary valve to agitate the slurry tank of an anaerobic digester.

BEST MODES OF CARRYING OUT THE INVENTION

The rotary valve shown generally referred to as V in the drawings, comprises an outer valve body part 1 in the form of a cylindrical tank, having peripherally spaced fluid outlet ports 2. In the present embodiment there are twelve such outlet ports 2 typically having a diameter of 25mm.

A cylinder 4, constituting an inner valve body part, is mounted for rotation withing the valve body part 1. The cylinder 4 is caused to rotate by a geared electric motor fixed to the top of the cylindrical tank 1, as shown in Figure 2.

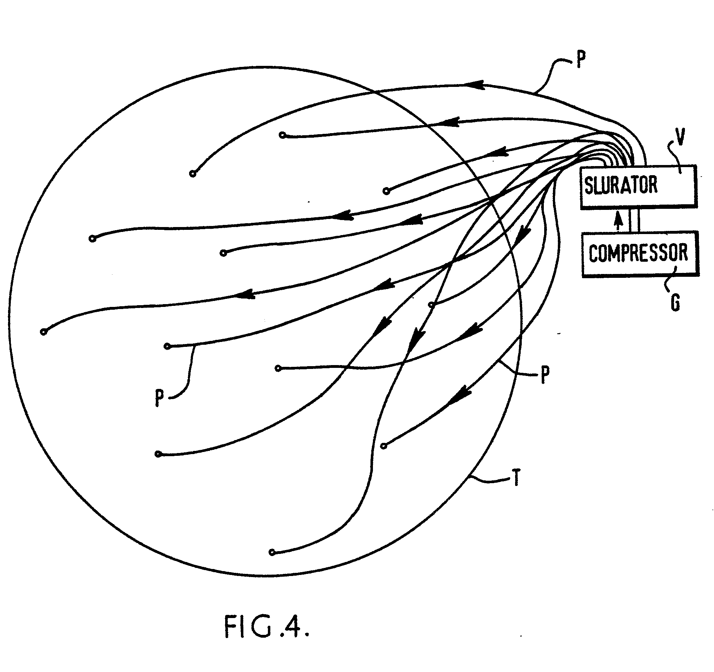

The cylinder 4 is provided with a radially directed duct 5 leading from an axially positioned inlet duct 6 for connection to an outside source of compressed air or gas G, see Figure 4.

The clearance C between the outer surface of the cylinder 4 and the inner surface of the outer cylindrical tank 1, is typically of the order of 1/2 mm.

In use compressed gas or air enters the cylinder 4 via the duct 6. The gas or air then passes through the radially directed duct 5 and is delivered sequentially to the outlet ports 2 as the inner cylinder 4 rotates, and thence to the mixing or aeration pipes P leading to the slurry tank holding the liquid to be agitated, as will be seen from Figure 4.

As mentioned earlier, it is not essential that the inner cylinder 4 is a precision fit within the outer cylindrical tank 1. This is because a certain amount of pressure is required to force the compressed air or gas through each mixing or aeration pipe from the rotary valve, since the air or gas is acting against the head of liquid in the tank containing the mixture to be agitated. Thus air or gas escaping into the clearance C between the two revolving bodies will not have sufficient pressure to travel up the outlet ports except the one that is "working" at any particular time.

The rotary valve according to an embodiment of the invention has been described, with reference to its application to anaerobic or aerobic digesters. However, it will be appreciated that the invention has wider fields of application, for example wherever it is desired to control the agitation and/or mixing of the fluid contents of a vessel.

CLAIMS

1.  A valve device for agitating slurry in an aerobic
or anaerobic digester comprising first inner and second
outer valve body parts (1,4) and characterised that the valve
body parts (1,4) are movable relative to one another,
one of the valve body parts (1) being provided with
spaced outlet ports (2) each for delivering compressed
gas or air through mixing or aerating lines (P) to
the slurry tank (T) of the digester, the other valve
body part (4) constituting, or being provided with,
delivery duct means (5,6) for sequential delivery
of compressed gas or air from an external source (G)
to said outlet ports (2) during said relative movement.

2.  A valve device as claimed in Claim 1 wherein
said one  valve body part (1) is cylindrical, and
said other body part (4) is also cylindrical and rotatably
mounted therewithin with a small clearance (C) between
the two parts (1,4), the spaced outlet ports (2) being
arranged peripherally of the  outer valve body part
(1).

3.  A valve device as claimed in Claim 2 wherein
said ducting means comprises an axially directed inlet
duct (6) leading to a radially directed outlet duct
(5), said outlet duct (5) being arranged sequentially
to index with the peripherally spaced ourlet ports
(2)as said inner cylindrical body (4) rotates.

4.  A valve device as claimed in Claim 3 wherein
the  inner cylindrical body (4) is rotated by means
of geared electric motor(E)mounted to  the  outer cylindrical body (1).

5. A valve device as claimed in Claim 4 wherein said clearance (C) is as high as 1/2 mm.

6. A digester for bacterial decomposition of animal excreta comprising a tank (T) for containing excreta slurry, a plurality of mixing or aerating feed lines (P) mounted at spaced positions to the tank (T), and a source (G) for delivery of compressed gas or air to the feed lines P, characterised in that a valve device as claimed in any one of Claims 1, 2, 3, 4 and 5 is coupled between the source (G) and the feed lines (P) with said delivery ducting means (5,6) being connected to the source (G), and the outlet ports (2) to respective ones of said feed lines (P), thereby to enable sequential delivery of compressed air or gas to the tank (T) of the digester.

0068906

1/2

FIG.2.

FIG.3.

0068906

FIG.4.

European Patent Office

**EUROPEAN SEARCH REPORT**

Application number

EP 82 30 3454.1

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | |
| A | DE - B - 1 245 912 (H. BEHAM) <br> * column 3, line 25 to column 4, line 24; fig. 1, 3 * <br><br> -- | 1,4,6 | A 01 C 3/02 |
| A | DE - B - 1 557 220 (M. STREICHER) <br> * claim 1; fig. 1, 2 * <br><br> ---- | 1,4,6 | |

TECHNICAL FIELDS SEARCHED (Int.Cl. 3)

A 01 C 3/00

B 01 F 13/02

CATEGORY OF CITED DOCUMENTS

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

X The present search report has been drawn up for all claims

| Place of search | Date of completion of the search | Examiner |
|---|---|---|
| Berlin | 25-08-1982 | SCHOFER |

EPO Form 1503.1 06.78